Europäisches Patentamt

European Patent Office

Office européen des brevets

(19)

(11) Veröffentlichungsnummer: **0 475 028 A2**

## (12) EUROPÄISCHE PATENTANMELDUNG

(21) Anmeldenummer: **91112265.3**

(22) Anmeldetag: **22.07.91**

(51) Int. Cl.5: **G06F 9/38**

(30) Priorität: **29.08.90 DE 4027324**

(43) Veröffentlichungstag der Anmeldung:
**18.03.92 Patentblatt 92/12**

(84) Benannte Vertragsstaaten:
**AT DE FR GB IT NL**

(71) Anmelder: **SIEMENS AKTIENGESELLSCHAFT**
**Wittelsbacherplatz 2**
**W-8000 München 2(DE)**

(72) Erfinder: **Geiger, Michael**
**Siegenburger Strasse 117**
**W-8000 München 21(DE)**
Erfinder: **Jensen, Thomas-Herlin**
**Mortagade 5/II**
**DK-2100 Kopenhagen O(DK)**
Erfinder: **Zolg, Markus**
**Nibelungenstrasse 5**
**W-8014 Neubiberg(DE)**

(54) Verfahren zum Betrieb eines Coprozessors in einem verteilten Rechnersystem.

(57) Beim Betrieb eines Coprozessors in einem verteilten Rechnersystem werden vom Coprozessor auszuführende Befehle von einem Rechner dem Coprozessor mitgeteilt. Der Coprozessor ist über eine Interfaceeinheit mit dem Rechner verbunden. In dieser Interfaceeinheit ist eine Softwareeinheit mit drei Funktionseinheiten enthalten. Die erste Funktionseinheit empfängt die Nachrichten vom Rechner, in der der auszuführende Befehl mit notwendigen Parametern enthalten ist, und packt diese Nachricht aus und decodiert den Befehl. Die zweite Funktionseinheit liefert entsprechend dem decodierten Befehl die Funktion, die auf den Coprozessor zugreifen kann. Ist diese Funktion z.B. ein Speicherzugriff zum Speicher des Coprozessors, dann wird dieser von der zweiten Funktionseinheit direkt veranlaßt. Ist die auszuführende Funktion ein Bearbeitungsschritt, der vom Coprozessor auszuführen ist, dann wird dies einer dritten Funktionseinheit mitgeteilt, die dem Coprozessor mit Hilfe eines Interrupts die auszuführende Funktion mitteilt. Der Coprozessor bearbeitet dann den Befehl und teilt mit einem weiteren Interrupt die Erledigung der Aufgabe mit. Über die zweite Funktionseinheit wird dies der ersten Funktionseinheit mitgeteilt und gleichzeitig die Ergebnisdaten an die Funktionseinheit übertragen. Die erste Funktionseinheit stellt aus den Ergebnissen wieder eine rechnerspezifische Nachricht zusammen, die an den Rechner übertragen wird. Das Konzept der Softwareeinheit ist derart, daß Anpassungen an neue Coprozessoren bzw. an ein neues geändertes Betriebssystem des Rechnersystems nur geringfügige Änderungen der Softwareeinheit erfordert.

EP 0 475 028 A2

Um komplexe Aufgaben, wie beispielsweise Analog-Simulationen oder dreidimensionale Graphik, effizient und sicher durchführen zu können, wird die Verwendung von Spezialhardware künftig eine wichtige Rolle spielen. Diese Spezialhardware kann sehr komplex aufgebaut sein, deshalb ist eine Integration in ein bestehendes Rechnersystem durch einfaches Anschließen der Spezialhardware allein nicht erreichbar. Diese Spezialhardware soll im folgenden Coprozessor genannt werden. Ein solcher Coprozessor wird zumindest einen Speicher und eine Datenverarbeitungseinheit enthalten. Er wird jedoch nicht so ausgeführt sein, daß er wie ein eigenständiger Rechner arbeiten kann. Vielmehr führt er nur Spezialfunktionen aus, die ein konventioneller Rechner nur mit großem Aufwand erledigen kann.

Ein solcher Coprozessor muß in ein Rechnersystem, das aus mehreren Rechnern bestehen kann, eingebunden werden. Dazu könnte jeweils ein Prozessor des Rechnersystems und der Coprozessor auf einer Platine angeordnet werden, wie dies z.B. bei einer CPU und einem Arithmetik-Coprozessor der Fall sein könnte. Möglich ist auch eine Kopplung mehrerer Coprozessoren mit mehreren Rechnern über eine entsprechende Netzwerk-Software, z.B. über ein local area network. Bei einer engen Kopplung auf einer Platine besteht der Nachteil, daß ausschließlich speziell für den Hauptprozessor entworfene Coprozessoren eingesetzt werden können. Außerdem darf der Coprozessor nur aus einem oder wenigen Chips bestehen, da die Kopplung auf einer Platine erreicht werden muß. Bei der Netzwerkopplung müssen die einzelnen Komponenten voll ausgereifte Rechner sein, so daß nicht mehr von Coprozessoren gesprochen werden kann.

Die der Erfindung zugrundeliegende Aufgabe besteht darin, ein Verfahren anzugeben, mit dem ein solcher Coprozessor in ein verteiltes Rechnersystem eingebunden werden kann. Diese Aufgabe wird gemäß den Merkmalen des Anspruchs 1 gelöst.

Das Verfahren bedient sich einer Softwareeinheit aus drei Softwaremodulen, im folgenden Funktionseinheiten genannt.

Mit Hilfe der ersten Funktionseinheit werden die Nachrichten, die von einem Rechner abgegeben werden und für den Coprozessor bestimmt sind, empfangen, decodiert und dann an die zweite Funktionseinheit weitergegeben. Die vom Rechner empfangenen Nachrichten sind rechnerspezifisch und könnten vom Coprozessor in dieser Form nicht bearbeitet werden. Die Funktionseinheit hat weiterhin die Aufgabe, die vom Coprozessor gelieferten Nachrichten, die coprozessorspezifisch sind, in rechnerspezifische Nachrichten umzuwandeln und sie zu einer Nachricht zusammenzustellen, die über z.B. einen Bus zu dem Rechner übertragen werden können. Die erste Funktionseinheit kann weiterhin registrieren, welches Benutzerprogramm gerade Zugriff zu den Coprozessor haben will und auch verschiedene Kommunikationsleitungen zum Rechner anbieten.

Die zweite Funktionseinheit erhält von der ersten Funktionseinheit die decodierte Nachricht. Die Nachricht enthält in einem ersten Teil die vom Coprozessor auszuführende Aufgabe und in einem zweiten Teil die dazu erforderlichen Parameter. Anhand des decodierten ersten Teiles der Nachricht wählt die zweite Funktionseinheit die Funktion aus, die vom Coprozessor auszuführen ist. Dazu enthält die zweite Funktionseinheit eine Tabelle der Funktionen, über die der Coprozessor bearbeitet werden kann. Diese Tabelle kann geändert werden und ohne Schwierigkeiten einem anderen Coprozessor angepaßt werden. Die zweite Funktionseinheit kann weiterhin auf den Speicher des Coprozessors direkt zugreifen und dazu z.B. eine in der Nachricht enthaltene symbolische Adresse in eine reale Adresse des Speichers des Coprozessors übersetzen und die in der Nachricht enthaltenen Parameter im Speicher des Coprozessors abspeichern.

Die dritte Funktionseinheit bildet die Verbindung zum Coprozessor. Diese dritte Funktionseinheit teilt dem Coprozessor mit, z.B. über Interrupts, welche Funktionen der Coprozessor ausführen soll. Die Funktion erhält die dritte Funktionseinheit von der zweiten Funktionseinheit. Schließlich kann sich der Coprozessor mit einem Interrupt an die dritte Funktionseinheit zurückmelden und mitteilen, daß er eine Funktion erfüllt hat. Die dritte Funktionseinheit kann schließlich die Schnittstelle zum Coprozessor bedienen.

Die Softwareeinheit weist eine hohe Modularität auf, sie hat die Funktion eines Rahmens, über den eine problemlose und sichere Kommunikation zwischen einem Rechner und dem Coprozessor möglich wird. Sie kann zudem schnell und gezielt an einen neuen Coprozessor angepaßt werden.

Sie weist weiterhin eine einfache Skalierbarkeit auf, neben Standardfunktionen können dynamisch spezielle Benutzerfunktionen in Abhängigkeit eines zu bearbeitenden Benutzerprogramms erstellt werden oder auch wieder entfernt werden.

Die Softwareeinheit vereinfacht die Benutzerschnittstelle, da dem Benutzer in Form einer Bibliothek eine Menge von Funktionen zur Verfügung gestellt werden, die den Zugriff auf den Coprozessor erleichtern, wie z.B. Registrierung des Benutzerprogramms oder Initialisieren eines Kommunikationspfades.

Schließlich kann durch die Softwareeinheit ermöglicht werden, daß der Coprozessor direkt adressiert wird. Dazu wird eine Funktion angeboten, über die der physikalische Adreßraum des Coprozessors direkt durch symbolische Adressen geschrieben oder gelesen werden kann. Die Folge ist ein transparenter Speicherzugriff auf den Coprozessor.

Dieses Konzept der Softwareeinheit zur Intergration eines Coprozessors in ein bestehendes Rechnersystem ist sowohl hardware-als auch betriebssystemunabhängig. Einzige Voraussetzung ist eine Hardware-Interfaceeinheit zwischen dem Coprozessor und dem Rechner, an dem der Coprozessor angeschlossen werden soll. Gleichzeitig eignet sich das Konzept auch für die Verwendung innerhalb eines verteilten Betriebssystems. In einem solchen Fall ist der Zugriff aus einem Benutzerprogramm (Applikationsprogramm) auf den Coprozessor transparent für den Benutzer. Die Flexibilität und Mächtigkeit des Konzepts ermöglicht auch die Integration zukünftiger Generationen von Prozessoren ohne die Struktur des Rechnersystems verändern zu müssen. Durch Aufnahme von benutzerspezifischen Funktionen in die Softwareeinheit kann die Softwareeinheit mit einfachen Mitteln an einen noch so komplexen Coprozessor angepaßt werden.

Das Konzept der Softwareeinheit ist unabhängig vom Betriebssystem, das die Rechner verwenden. Bei einer Änderung des Betriebssystems muß lediglich die erste Funktionseinheit entsprechend angepaßt werden. Die zweite und dritte Funktionseinheit kann dagegen unverändert bleiben. Bei Änderung des Coprozessors ist lediglich eine Anpassung z.B. der zweiten Funktionseinheit wegen der Coprozessor Zugriffsfunktionen und der dritten Funktionseinheit wegen der zu bearbeitenden Interrupts erforderlich.

Anhand eines Ausführungsbeispieles, das in den Figuren dargestellt ist, wird die Erfindung weiter erläutert. Es zeigen

Figur 1    ein Blockschaltbild eines verteilten Rechnersystems,

Figur 2    ein Ablaufdiagramm, das die Bearbeitung eines ersten Benutzerbefehls zeigt,

Figur 3    ein Ablaufdiagramm, das die Bearbeitung eines zweiten Benutzerbefehls darstellt.

Figur 4    das Konzept der Softwareeinheit.

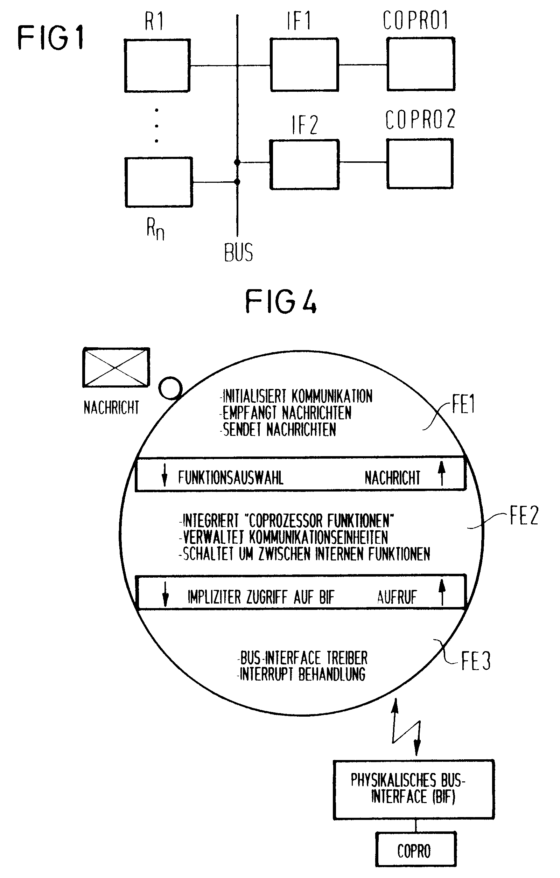

Das in Figur 1 gezeigte Blockschaltbild eines verteilten Rechnersystems soll nur prinzipiell die Einbindung von Coprozessoren COPRO in ein verteiltes Rechnersystem zeigen. Das verteilte Rechnersystem bestehe aus Rechnern R1 bis Rn (n ganze Zahl). Die Rechner R1 bis Rn sind mit einem Bus BUS verbunden, über die auf übliche Art und Weise Nachrichten ausgetauscht werden. Soll an ein solches Rechnersystem ein Coprozessor COPRO angebunden werden, dann wird zwischen Coprozessor COPRO und dem Bus BUS eine Interfaceeinheit IF angeordnet. In Figur 1 sind zwei Coprozessoren gezeigt, jedem Coprozessor ist eine Interfaceeinheit IF zugeordnet.

Während ein Coprozessor Spezialhardware zur Bearbeitung von speziellen Funktionen darstellt und dementsprechend nicht als Universalrechner ausgeführt ist, jedoch zumindest einen Speicher und eine spezielle Datenverarbeitungseinheit aufweist, muß die Interfaceeinheit IF eine Schnittstelle zum Bus und eine Schnittstelle zum Coprozessor COPRO haben. Die von den Rechnern R zusammengestellten Nachrichten sind rechnerspezifisch und könnten in dieser Form von den Coprozessoren COPRO nicht bearbeitet werden. Um dies zu ermöglichen, ist in der Interfaceeinheit IF jeweils eine Softwareeinheit angeordnet, die die Zusammenarbeit eines Rechners R mit einem Coprozessor COPRO ermöglicht. Die Interfaceeinheit weist deshalb zumindest einen Speicher auf, in dem die Softwareeinheit gespeichert ist und eine Verarbeitungseinheit, um die einzelnen Befehle der Softwareeinheit auszuführen. Schließlich müssen noch übliche Schnittstellen zu den Rechnern und den Coprozessoren vorhanden sein.

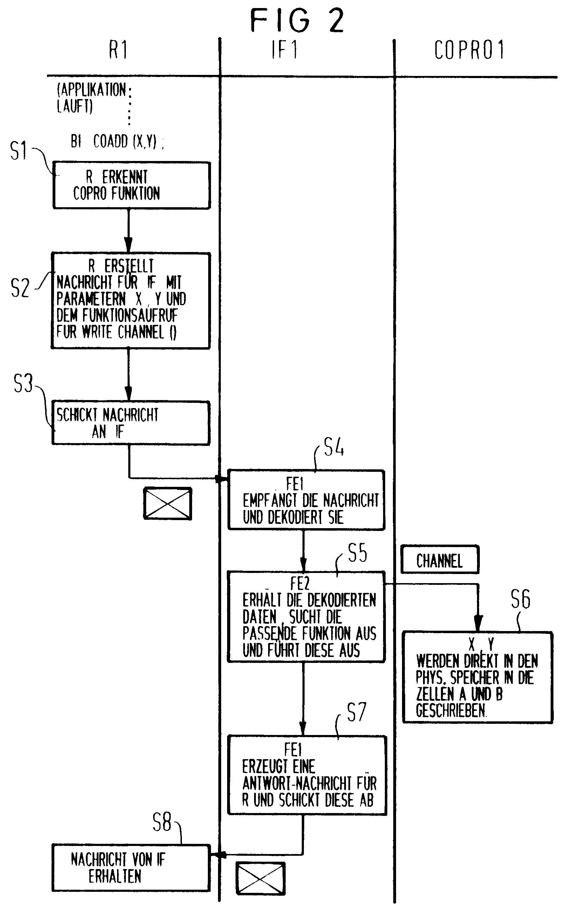

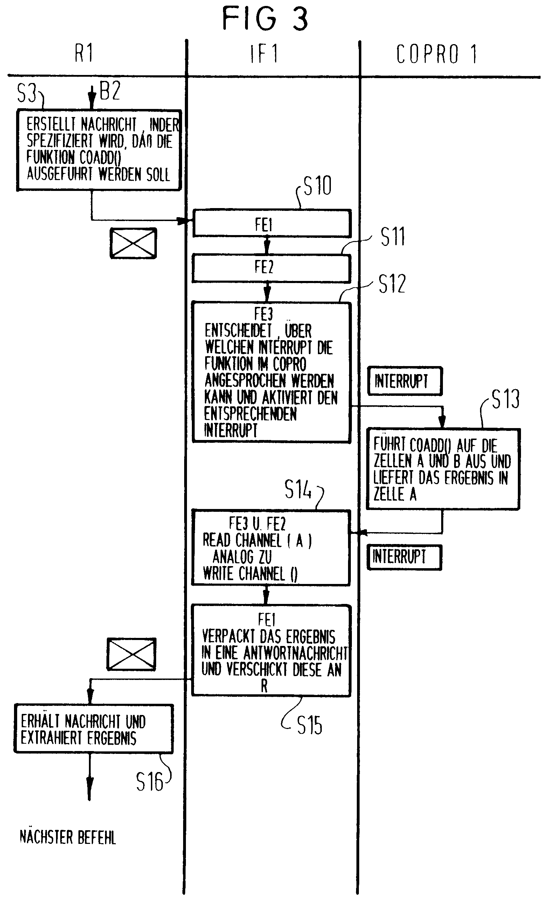

Die Arbeitsweise der Softwareeinheit wird mit Hilfe der Figuren 2 und 3 weiter erläutert. Es wird angenommen, daß ein Benutzerprogramm einen Befehl coADD (x, y) enthält. Das zugeordnete Benutzerprogramm soll z.B. auf dem Rechner R1 laufen. Der Rechner R1 erkennt, daß es sich um einen Befehl handelt, der von dem Coprozessor COPRO1 ausgeführt werden soll (Schritt S1). Zur Ausführung des Befehles B1 stellt nun der Rechner R1 eine Nachricht zusammen, die der Interfaceeinheit IF1 zugeleitet werden soll. Diese Nachricht enthält in einem ersten Teil in codierter Form die vom Coprozessor auszuführende Funktion und in einem zweiten Teil die dazu erforderlichen Parameter. Die Funktion, die auszuführen ist, ist z.B. der Befehl writeChannel und die Parameter seien x, y. Nachdem im Schritt S2 die Nachricht zusammengestellt worden ist, wird in einem Schritt S3 die Nachricht an die Interfaceeinheit IF1 übersendet.

Die von der Interfaceeinheit IF1 empfangene Nachricht wird durch die erste Funktionseinheit FE1 der Softwareeinheit entgegengenommen und decodiert (Schritt S4), d.h. die Nachricht wird aufgeteilt in den ersten Teil und in den Parameterteil. Der erste Teil wird decodiert, der zweite Teil wird unverändert an die zweite Funktionseinheit FE2 weitergegeben. Anhand des decodierten ersten Teiles kann die zweite Funktionseinheit FE2 die auszuführende Funktion feststellen (Schritt S5). Die auszuführende Funktion ist hier writeChannel, d.h. die Parameter x, y sollen in den Speicher des Coprozessors eingeschrieben werden. Die zweite Funktionseinheit FE2 entwickelt aus den Parametern x,y die z.B. eine symbolische Adresse enthalten können, die reale Adresse, unter der die Parameter abzuspeichern sind. Sie veranlaßt einen direkten Zugriff zu dem Speicher des Coprozessors und schreibt in den ausgewählten Speicherbereich die Parameter ein (Schritt S6). Zum Beispiel werden die Parameter in die Zellen a und b geschrieben. Die Verarbeitungseinheit des Coprozessors wird dabei nicht verwendet.

Im Schritt S7 erzeugt die erste Funktionseinheit FE1 eine Antwortnachricht für den Rechner R1 und schickt diese ab. Hier wird mitgeteilt werden, daß der Befehl writeChannel ausgeführt worden ist. Die Nachricht wird von der ersten Funktionseinheit FE1 so erzeugt, daß sie vom Rechner R1 bearbeitbar ist, sie hat also eine rechnerspezifische Form. Im Schritt S8 ist angegeben, daß diese Nachricht von der Interfaceeinheit IF zum Rechner R übertragen worden ist.

Figur 3 zeigt eine weitere Ausführung eines Befehls B2. Jetzt soll mit Hilfe des Coprozessors eine Addition der in den Zellen a und b des Speicher des Coprozessors enthaltenen Parameter durchgeführt werden. Aus dem Benutzerprogramm wird ein entsprechender Befehl B2 entnommen und im Schritt S9 die Nachricht vom Rechner R1 zusammengestellt. Sie wird zur Interfaceeinheit IF1 übertragen. Dort empfängt im Schritt S10 die erste Funktionseinheit die Nachricht, decodiert diese auf die bereits angegebene Weise und überträgt die decodierte Nachricht an die zweite Funktionseinheit FE2 (Schritt S11). Die zweite Funktionseinheit FE2 entnimmt der decodierten Nachricht die Funktion, die auszuführen ist, die im Beispiel Addieren sei. Mit Hilfe der Parameter kann dann festgestellt werden, welche Zellen addiert werden sollen.

Im Schritt S12 wird die Funktion der dritten Funktionseinheit FE3 mitgeteilt, die nun entscheidet, über welchen Interrupt die Funktion im Coprozessor angesprochen werden kann und aktiviert den entsprechenden Interrupt.

Dieser Interrupt teilt dem Coprozessor COPRO1 mit, welche Funktion er ausführen soll und gibt auch die Zellen an, deren Inhalte im Beispiel addiert werden sollen (Schritt S13). Der Coprozessor COPRO1 führt also die Addition der Inhalte der Zellen a und b aus und speichert z.B. das Ergebnis in die Zelle a. Wenn der Coprozessor COPRO1 seine Arbeit beendet hat, gibt er einen Interrupt ab, der der dritten Funktionseinheit mitteilt, daß der Befehl ausgeführt ist. Die dritte Funktionseinheit FE3 teilt dies der zweiten Funktionseinheit FE2 mit (Schritt S14), die aus dem Speicher die Zelle a liest und das gelesene Ergebnis der ersten Funktionseinheit zuführt. Die erste Funktionseinheit verpackt das Ergebnis in einer Antwortnachricht und sendet diese an den Rechner R1 (Schritt S15). Im Schritt S16 erhält der Rechner die Nachricht und wertet dann das Ergebnis weiter aus.

Daraufhin erfolgt im Rechner R1 die Bearbeitung des nächsten Befehles des Benutzerprogramms.

Anhand der Beispiele der Figuren 2 und 3 ist somit gezeigt worden, daß bei Zugriffen zum Speicher des Coprozessors ein direkter Zugriff über die zweite Funktioneinheit möglich ist, wobei die zweite Funktioneinheit FE2 eine symbolische Adresse im Befehl in die reale Speicheradresse des Coprozessors übersetzt. Es ist weiterhin erkennbar, daß Bearbeitungsbefehle, die vom Coprozessor auszuführen sind, z.B. über Interrupts dem Coprozessor mitgeteilt werden und der Coprozessor nach Beendigung des Befehls wiederum über Interrupt anzeigt, daß der Befehl ausgeführt ist.

In einer symbolischen Darstellung der Figur 4 werden noch einmal die drei Funktionseinheiten der Softwareeinheit gezeigt. Die erste Funktionseinheit FE1 ist zum Rechner R ausgerichtet, erhält rechnerspezifische Nachrichten bzw. stellt rechnerspezifische Nachrichten zusammen. Sie kann auch die Kommunikation mit dem Rechner initialisieren. Die erste Funktionseinheit FE1 hat weiterhin die Funktion, die Nachrichten, die vom Rechner kommen, zu dekodieren, um sie für den Coprozessor COPRO ausführbar zu machen. Dementsprechend übermittelt die erste Funktionseinheit FE1 die decodierte Funktion zur zweiten Funktionseinheit FE2.

In der zweiten Funktionseinheit FE2 wird nun anhand des decodierten Befehls die Coprozessorfunktion ausgewählt und entweder bei Speicherzugriffen der Speicherzugriff ausgeführt oder bei sonstigen Bearbeitungsbefehlen die dritte Funktionseinheit FE3 angesprochen, um dem Coprozessor mitzuteilen, welchen Bearbeitungsschritt er durchführen soll. Die zweite Funktionseinheit FE2 teilt Ergebnisse der ersten Funktionseinheit FE1 mit, die dann neu verpackt diese Ergebnisse zum Rechner überträgt.

Die dritte Funktionseinheit FE3 ist an den Aufbau des Coprozessors COPRO angepaßt. Sie erzeugt Interrupts, über die dem Coprozessor mitgeteilt wird, welchen Verarbeitungsschritt er ausführen muß. Und sie erhält Interrupts vom Coprozessor, wenn dieser seine Arbeit ausgeführt hat. Dementsprechend wählt die dritte Funktionseinheit FE3 entsprechende Interruptleitungen aus oder bewertet Interruptleitungen. Die Verbindung zwischen der Interfaceeinheit und dem Coprozessor COPRO ist eine allgemeine Schnittstelle zwischen beiden, die so allgemein ausgelegt ist, daß beliebige Coprozessoren angeschlossen werden können.

Die Funktionseinheit FE1 ist somit in ihrer Ausführung sowohl an den Rechner angepaßt als auch an die zweite Funktionseinheit FE2. Die dritte Funktionseinheit FE3 ist an den Coprozessor angepaßt und auch an die zweite Funktionseinheit FE2. Bei Änderung des Coprozessors ist entweder eine Änderung der zweiten Funktionseinheit FE2 wegen anderer Funktionen und der dritten Funktionseinheit FE3 wegen neuer Interrupts notwendig. Bei Änderung des Rechnersystems, z.B. des Betriebssystem eines Rechnersystems, muß eine Änderung der ersten Funktionseinheit FE1 erfolgen, jedoch nicht der Funktionseinheit FE3, eventuell der Funktionseinheit FE2, wenn neue Funktionen auszuführen sind. Somit ist ersichtlich, daß die Softwareeinheit ermöglicht, beliebige Coprozessoren in ein bestehendes Rechnersystem einzuordnen, ohne daß große Änderung an der Softwareeinheit notwendig sind.

Bei den Rechnern des Rechnersystems kann es sich um handelsübliche Rechner handeln, ebenso kann die Ausführung der Coprozessoren handelsüblich sein. Die einzelnen Funtionseinheiten sind Programme, die in der Interfaceeinheit gespeichert sind und zur Ausführung eine übliche Interfaceeinheit benötigen. Die Interfaceeinheit ist hardwaremäßig ebenfalls vom üblichen Aufbau.

**Patentansprüche**

1. Verfahren zum Betrieb eines Coprozessors in einem verteilten Rechnersystem, bei dem der Coprozessor über eine Interfaceeinheit mit dem Rechnersystem verbunden ist mit folgenden Schritten:
   - stellt ein Rechner (R) bei der Abarbeitung eines Programms fest, daß ein Prozeß vom Coprozessor (CPPRO) ausgeführt werden soll, dann sendet er eine rechnerspezifische Nachricht, die die Art des auszuführenden Prozesses in einem ersten Teil und die dazu notwendigen Parameter in einem zweiten Teil enthält, an die Interfaceeinheit (IF),
   - in der Interfaceeinheit (IF) wird in einer ersten Funktionseinheit die rechnerspezifische Nachricht in seine beiden Teile aufgeteilt, der erste Teil decodiert und dieser decodierte Teil zusammen mit dem zweiten Teil einer zweiten Funktionseinheit (FE2) zugeführt,
   - in der zweiten Funktionseinheit (FE2) wird aus dem decodierten ersten Teil der Nachricht die auszuführende Funktion entnommen und unter Verwendung der Parameter die Coprozessor spezifische Funktion erzeugt und dem Coprozessor zugeführt.

2. Verfahren nach Anspruch 1, dadurch **gekennzeichnet,** daß bei Ausführung der Funktion Speicherzugriff zu einem Speicher des Coprozessors die zweite Funktionseinheit (FE2) den Speicherbefehl ausführt und den Speicherbereich im Speicher des Coprozessors festlegt.

3. Verfahren nach Anspruch 2, dadurch **gekennzeichnet,** daß die zweite Funktionseinheit (FE2) die Zugriffsadresse als symbolische Adresse erhält und aus der symbolischen Adresse die reale Adresse des Speicherbereiches im Coprozessors errechnet.

4. Verfahren nach einem der vorhergehenden Ansprüche, dadurch **gekennzeichnet,** daß die auszuführende Funktion einen Verarbeitungsschritt des Coprozessors (COPRO) erfordert, daß die zweite Funktionseinheit (FE2) einer dritten Funktionseinheit (FE3) mitteilt, welche Funktion der Coprozessor ausführen soll, die dritte Funktionseinheit dann entscheidet, über welchen Interrupt der Coprozessor anzusprechen ist und diesen Interrupt aktiviert, daß der Coprozessor die Funktion ausführt und nach Ausführung über einen Interrupt dies der dritten Funktionseinheit mitteilt, die anhand des Interrupts die Ausführung feststellt und dies der zweiten Funktionseinheit mitteilt.

5. Verfahren nach einem der Ansprüche 2 bis 4, dadurch **gekennzeichnet,** daß die vom Coprozessor gelieferten Ergebnisdaten über die zweite Funktionseinheit (FE2) der ersten Funktionseinheit (FE1) mitgeteilt werden und von dieser in einer Nachricht verpackt werden, die rechnerspezifisch ist und dem rufenden Rechner zugeführt wird.

FIG 1

FIG 4

# FIG 2

| R1 | IF1 | COPRO1 |
|---|---|---|

(APPLIKATION:
LAUFT) :

B1 COADD (X,Y):

S1 — R ERKENNT
COPRO FUNKTION

S2 — R ERSTELLT
NACHRICHT FÜR IF MIT
PARAMETERN X , Y UND
DEM FUNKTIONSAUFRUF
FÜR WRITE CHANNEL ()

S3 — SCHICKT NACHRICHT
AN IF

S4 — FE1
EMPFÄNGT DIE NACHRICHT
UND DEKODIERT SIE

CHANNEL

S5 — FE2
ERHÄLT DIE DEKODIERTEN
DATEN , SUCHT DIE
PASSENDE FUNKTION AUS
UND FÜHRT DIESE AUS

S6 — X Y
WERDEN DIREKT IN DEN
PHYS. SPEICHER IN DIE
ZELLEN A UND B
GESCHRIEBEN.

S7 — FE1
ERZEUGT EINE
ANTWORT-NACHRICHT FÜR
R UND SCHICKT DIESE AB

S8 — NACHRICHT VON IF
ERHALTEN

7

# FIG 3

| R1 | IF 1 | COPRO 1 |
|---|---|---|

S3   ↓B2

ERSTELLT NACHRICHT , IN DER
SPEZIFIZIERT WIRD, DAß DIE
FUNKTION COADD()
AUSGEFÜHRT WERDEN SOLL

⊠

S10

FE1

S11

FE2

S12

FE3
ENTSCHEIDET , ÜBER
WELCHEN INTERRUPT DIE
FUNKTION IM COPRO
ANGESPROCHEN WERDEN
KANN UND AKTIVIERT DEN
ENTSPRECHENDEN
INTERRUPT

INTERRUPT

S13

FÜHRT COADD() AUF DIE
ZELLEN A UND B AUS UND
LIEFERT DAS ERGEBNIS IN
ZELLE A

S14

FE3 U. FE2
READ CHANNEL ( A )
ANALOG ZU
WRITE CHANNEL ()

INTERRUPT

FE1
VERPACKT DAS ERGEBNIS
IN EINE ANTWORTNACHRICHT
UND VERSCHICKT DIESE AN
R

⊠

S15

ERHÄLT NACHRICHT UND
EXTRAHIERT ERGEBNIS

S16

NÄCHSTER BEFEHL